# EUROPEAN PATENT SPECIFICATION

(11) **EP 1 424 507 B1**
(45) Date of publication and mention of the grant of the patent: **22.07.2009**
(21) Application number: 03104183.3
(22) Date of filing: 13.11.2003
(51) Int. Cl.: F16F 15/02, F16M 11/12

(54) **Elementary and complex coupling devices, and their use**
Elementare und komplexe Kupplungsvorrichtungen, und deren Verwendung
Dispositifs d'accouplement élémentaires et complexes, et leurs utilisations

(30) Priority: 29.11.2002 NL 1022035
(43) Date of publication of application: 02.06.2004
(73) Proprietor: THALES NEDERLAND B.V., 7550 GD Hengelo (NL)
(72) Inventor: Mulder, Jan, 94117 CX Arcueil (FR)
(74) Representative: Lucas, Laurent Jacques

(56) References cited:
- EP-A- 0 062 584
- WO-A-01/65136
- US-A- 3 419 238
- US-A- 3 865 340
- US-A- 3 871 778
- US-A- 5 663 486
- US-B1- 6 398 444

## Description

This invention relates to a complex coupling device. In particular, such a coupling device may be used for supporting radar or antenna or optical sensor equipment, notably on vessels.

The first aim of such coupling devices is to adjust one object in relation to another. Therefore, the first art has used straight adjusting means having no interconnection with each other.

Owing to this straightness, it is impossible to adjust one object to the other giving simultaneous retraction, extension, lateral and tilting movement.

Present coupling devices are designed to permit mutual translational movement and prevent mutual rotation of the objects as the one proposed by the American Patent US 3, 871, 778 granted March 18, 1975.

This patented coupling mechanism couples the objects by elastic means and by means of at least three coupling devices. Each of these three coupling devices consists of two systems. Each system comprises four bars linked to form a closed loop by means of hinged joints. The two systems have one bar in common.

This coupling device mechanism is principally over constrained (excessively fixed, containing redundant constraints), which can lead to high internal stresses and even fracture. It is therefore in practice only working properly provided that the common bar of the coupling device is intentionally made weak in torsion.

The US patent US 3,865,340 discloses a support apparatus. Moreover, in general, coupling devices according to the prior art are made with relatively many parts and hinges, and use simple hinges that allow rotation around one axis. For applications like antenna, radar and optical sensor supports, such simple hinges are not available as off the shelf parts.
This invention solves the above-mentioned drawbacks by providing coupling devices, which permit relative translational movement of the coupled objects but prevent relative rotational movement of these objects around any axis. The coupling device of this invention contains fewer parts and may have, in particular, better stiffness properties, because it contains less hinges.

An object of this invention is a complex coupling device comprising three elementary coupling devices, each elementary coupling device comprising:
- A means for stiffening 1 the elementary coupling device against torsion,
- Two means for linking 2' and 2" the means for stiffening 1 to a second object to be coupled 4ₒ,
- Two first means for hinging 2/4' and 2/4" the two means for linking 2' and 2" on the second object to be coupled 4ₒ at two separate points,
- Two second means for hinging 1/2' and 1/2" the means for stiffening 1 on the means for linking 2' and 2" at two separate points,
- Two third means for hinging 1/3', 1/3" the means for stiffening 1 on a first object to be coupled 3ₒ at two separate points,
all the means for hinging (2/4', 2/4", 1/2', 1/2", 1/3', 1/3") of the three elementary coupling devices allowing rotation around any axis.

Another embodiment of this invention is a complex coupling device in which the three elementary coupling devices are mounted relatively to each other so that the axes of all elementary coupling devices are mutually perpendicular, the said elementary axes being the axes normal to the planes defined by the two means for linking (2'₁-2"₁, 2'₂-2"₂, 2'₃-2"₃) of each elementary coupling device.

Moreover, another object of this invention is the use of such a complex coupling device with means for supporting 3, 4 specially adapted for supporting radar, antenna or optical sensor equipment.

Further features and advantages of the invention will be apparent from the following description of examples of embodiments of the invention with reference to the drawings, which show details essential to the invention, and from the claims. The scope of protection is defined by the claims.
- Figure 1, an example of one of the elementary coupling devices of the complex coupling device according to the invention,
- Figure 2a and Figure 2b, schematic partial top views of two alternative examples and Figure 2c, Figure 2d, Figure 2e, Figure 2f, Figure 2g, Figure 2h, Figure 2i and Figure 2j schematic partial side views of eight alternative examples for integrating the elementary coupling device with means for linking,
- Figure 3a, Figure 3b, Figure 3c and Figure 3d, respectively, a three-dimensional view from above, a front view, a top view and a side view of a first embodiment of the complex coupling device according to the invention,
- Figure 4a, Figure 4b, Figure 4c and Figure 4d, respectively, a three-dimensional view from above, a front view, a top view and a side view of a second embodiment of the complex coupling device according to the invention,
- Figure 5a, Figure 5b, Figure 5c and Figure 5d, respectively, a top view, a side view, a three-dimensional view and a front view of a third embodiment of the complex coupling device according to the invention,
- Figure 6a and Figure 6b, respectively, a cross section and a three dimensional view of an extension of the third embodiment, i.e. the third embodiment of the complex coupling device combined with a means for covering.

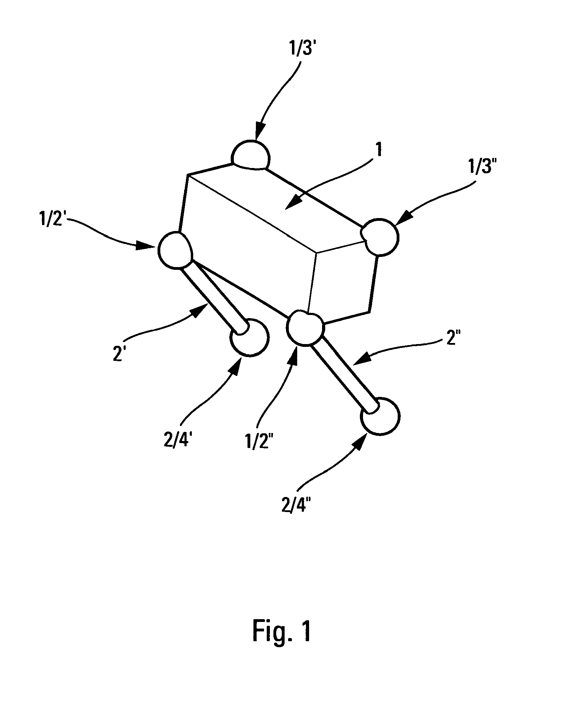

Figure 1 shows an example of one of the elementary coupling devices of the complex coupling device according to the invention. The elementary coupling device comprises: a means for stiffening 1 the elementary coupling device against torsion and two means for linking 2' and 2" the means for stiffening 1 to a first object to be coupled 3ₒ.

Two first means for hinging 2/4' and 2/4" are placed at two separate points: respectively, between each means for linking 2' and 2" and two separate points of the second object to be coupled 4ₒ if hinged directly. If the means for linking 2' and 2" and the second object to be coupled 4ₒ are hinged indirectly, the two first means for hinging 2/4' and 2/4" can, for example, be placed at two separate points: respectively, between each means for linking 2' and 2" and two separate points of a second means for connecting 4, which is connected rigidly to the second object to be coupled 4ₒ: a means for resting, for example. So, the means for linking 2' and 2" are hinged to this means for resting 4. This said means for resting 4 could be fixed to the second object to be coupled 4ₒ.

Two second means for hinging 1/2' and 1/2" are placed between the means for stiffening 1 and each means for linking 2' and 2" at two separate points.

Two third means for hinging 1/3' and 1/3" are placed at two separate points: respectively, between two separate points of the means for stiffening 1 and two separate points of the first object to be coupled 3ₒ if hinged directly. If the means for stiffening 1 and the first object to be coupled 3ₒ are hinged indirectly, the two third means for hinging 1/3' and 1/3" are placed at two separate points: respectively, between two separate points of the means for stiffening 1 and two separate points of, for example, a first means for connecting 3 which is connected to the first object to be coupled 3ₒ: a means for supporting, for example.

The means for stiffening 1 is a box as represented on Figure 1. In particular, the means for stiffening 1 can be a hollow box, in which objects can be placed, for example. Furthermore, the means for linking 2 are bars.

The first, second and third means for hinging 1/2', 1/2", 1/3', 1/3", 2/4' and 2/4" are hinges which allow rotation around any axis. So, the first, second and third means for hinging 1/2', 1/2", 1/3', 1/3", 2/4' and 2/4" can be universal hinges or cardan joints or ball-and-socket joints as represented in Figure 1. Moreover, at least one of the two third means for hinging 1/3' and 1/3" can allow relative translational movement in the direction of the line through the centres of the means for hinging 1/3' and 1/3". So one of these third means for hinging 1/3' and 1/3" can be an universal hinge combined with linear guidance such as, for example, axial play.

Such an elementary coupling device prevents rotational movement around an axis normal to the plane 1/2' - 1/2" - 2/4' - 2/4", without the drawbacks of internal stresses, generating failure, as for example fractures. Moreover, elementary coupling devices as the one represented by Figure 1 contain fewer parts and fewer hinges than prior elementary coupling devices. Additionally, the proposed elementary devices work without simple hinges.

Such an elementary coupling device provides a high rotational stiffness around one axis, said axis being the normal of the plane defined by the axes of the means of linking 2' and 2", or alternatively said axis being the normal of the plane defined by each three out of four centres of the means for hinging 1/2', 1/2", 2/4' and 2/4".

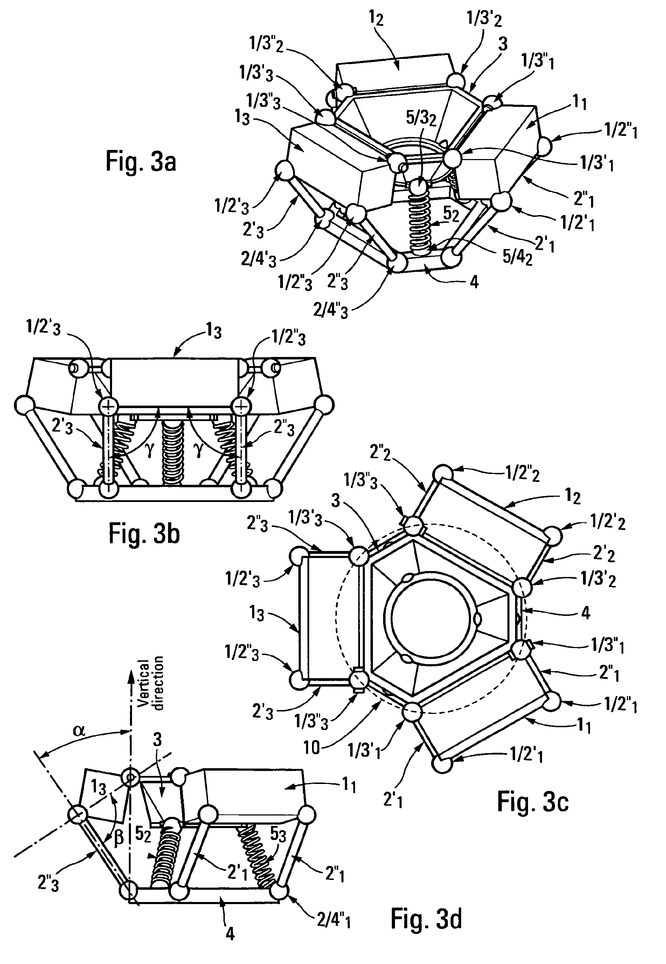

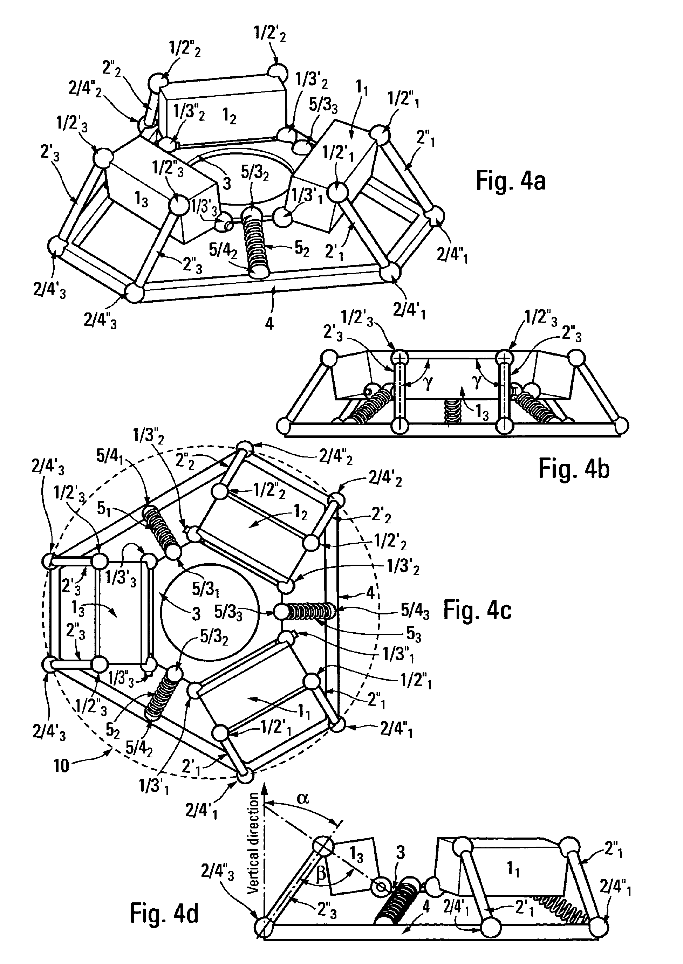

Figures 3a, 3b, 3c, 3d and Figures 4a, 4b, 4c and 4d represent first and second embodiments of a complex coupling device according to the invention. The represented complex coupling devices comprise three elementary coupling devices as the one shown in Figure 1. In a more favourable situation, in order to have a complex coupling device preventing rotation around any axis, the three elementary coupling devices are mounted relative to each other in such a manner that the axes of the three elementary coupling devices around which they provide high rotational stiffness are not lying in one plane.

A particularly favourable situation may exist when these three said elementary axes are mutually perpendicular in the undisturbed state of the complex coupling device. This undisturbed state is defined as the condition in which all relative translations between the first and the second objects to be coupled 3ₒ and 4ₒ are zero. If these elementary axes are mutually perpendicular then the rotational stiffness of the complex coupling device around any, arbitrarily oriented, axis is the same. Each of these said elementary axes is the axis normal to the plane defined by the two means for linking 2' and 2" of the respective elementary coupling devices.

The means for supporting 3 and/or the means for resting 4 can be common to the three elementary coupling devices.

Hence, the means for resting 4 is the base of the complex coupling device. This base 4 may be a lower six-sided ring, as shown by Figures 3a, 3b, 3c, 3d and Figures 4a, 4b, 4c, 4d. The base could be mounted on a ship for example.

Each corner of the lower six-sided ring base 4 is connected through one of the means for linking 2'₁-2"₁, 2'₂-2"₂, and 2'₃-2"₃ (at each end supplied with respective first or second means for hinging 1/2'₁-1/2"₁, 2/4'₁-2/4"₁, 1/2'₂-1/2"₂, 2/4'₂-2/4"₂ or 1/2'₃-1/2"₃, 2/4'₃-2/4"₃) to the respective means for stiffening 1₁, 1₂, and 1₃.

Moreover, each means for stiffening 1₁, 1₂, and 1₃ may be connected through respective two third means for hinging 1/3'₁-1/3"₁, 1/3'₂-1/3"₂ and 1/3'₃-1/3"₃ to an upper six-sided ring comprised in the common means for supporting 3. One of the two third means for hinging 1/3'₁, 1/3'₂ and 1/3'₃ may be an universal hinge. The other third means for hinging 1/3"₁, 1/3"₂ and 1/3"₃ may be an universal hinge with additionally the possibility of translational movement in the direction of the rotation axis between the respective means for stiffening 1₁, 1₂, and 1₃ and the means for supporting 3.

Furthermore, the complex coupling device can comprise at least one means for absorbing vibrations and shocks 5₁, 5₂, and 5₃. Each means for absorbing vibrations and shocks 5₁, 5₂, and 5₃ is mounted at its first extremity to the means for supporting 3 through a respective means for hinging 5/3₁, 5/3₂, and 5/3₃ and by its second extremity to the means for resting 4 through a respective means for hinging 5/4₁, 5/4₂, and 5/4₃. These means for hinging 5/3₁, 5/3₂, and 5/3₃, 5/4₁, 5/4₂, and 5/4₃ can also be universal hinges or cardan joints or ball-and-socket joints as represented in Figures 3a, 3b, 3c, 3d and Figures 4a, 4b, 4c, 4d. For example, the complex coupling device can comprise one means for absorbing vibrations and shocks 5₁, 5₂, and 5₃ in between each group of two elementary coupling devices as shown by Figures 3a, 3b, 3c, 3d, 4a, 4b, 4c and 4d.

Such means for absorbing vibrations and shocks 5₁, 5₂, and 5₃ limit the translational movements. These three means for absorbing vibrations and shocks 5₁, 5₂, and 5₃ can ensure resonance frequencies of the complex coupling devices within a range of about 2 to 10 Hz. The resonance frequencies should be below the main shock frequencies (> 10 Hz), thus providing isolation for shocks caused, for example, by underwater explosions. But, the resonance frequencies should be above frequencies of usual ship movements and shock whipping (< 2 Hz), thus limiting the maximum travel, in particular spring travel. So, the complex coupling device also provides shock and/or vibration isolation for the means for supporting 3 and the first object to be coupled 3ₒ placed on top.

A favourable situation exists if, in the undisturbed state of the complex coupling device, the forces exerted by the means for absorbing vibration and/or shocks 5₁, 5₂, and 5₃ approximately cross the centre of gravity of the combination of the means for stiffening 1₁, 1₂, and 1₃, the means for supporting 3 and the first object to be coupled 3ₒ. In such situation, disturbing tilting torques caused by linear accelerations, for example due to ship movements, are minimised and, thus, angle accuracy is increased.

The ratio of resonance frequencies of horizontal and vertical translation modes may be altered by changing the nominal angle between the central axis of each of the means for absorbing vibrations and shocks 5₁, 5₂, and 5₃ and the vertical direction.

Spring-dampers, depicted as coil springs in Figures 3a, 3b, 3c, 3d, 4a, 4b, 4c and 4d, can be used as means for absorbing vibrations and shocks 5₁, 5₂, and 5₃ for the complex coupling device. The means for absorbing vibrations and shocks 5₁, 5₂, and 5₃ may also be materialised as Belleville spring stackings, wire rope isolators/cable mounts and/or any other type of spring and/or contain additional dampers.

The construction of the complex coupling device can be statically determined because it contains a proper combination of:
- means for stiffening 1₁, 1₂, and 1₃
- objects to be coupled 3ₒ and 4ₒ
- means for linking 2'₁-2"₁, 2'₂-2"₂, and 2'₃-2"₃
- means for hinging 1/2'₁-1/2"₁, 1/3'₁-1/3"₁, 2/4'₁-2/4"₁, 1/2'₂-1/2"₂, 1/3'₂-1/3"₂, 2/4'₂-2/4"₂ and 1/2'₃-1/2"₃, 1/3'₃-1/3"₃, 2/4'₃-2/4"₃
which couple specific degrees of freedom.

This means that the actual geometry of all parts involved does not have to be ideal to enable mounting of all parts. For example, the length of any one or more of the means for linking 2'₁, 2"₁, 2'₂, 2"₂, 2'₃, 2"₃ may be altered without generating internal forces and stresses. However, only for an ideal geometry, the complex coupling device will provide pure relative translational movements, without any relative rotational movements occurring.

This said ideal geometry is obtained when, for each of the elementary coupling devices, the two following conditions are satisfied:
- the axes of the means for linking 2' and 2" are parallel,
- the line through the centres of the first means for hinging 2/4' and 2/4" and the line through the second means for hinging 1/2' and 1/2" and the line through the third means for hinging 1/3' and 1/3", are parallel.

These two conditions imply, for example, that the lengths of the means for linking 2' and 2" are equal. Different lengths may be used for each of the three elementary coupling devices. Also all other sizes and angles may be altered or may be different for each of the elementary coupling devices, as long as the two above conditions are fulfilled for each elementary coupling device.

As mentioned before, a particular favourable situation may exist if the axes of the three elementary coupling devices around which they prevent rotation are mutually perpendicular. This is obtained, together with a highly symmetrical set up with respect to the vertical direction, if the three elementary coupling devices have equal dimensions and if, in the undisturbed stated of the complex coupling device, the angle α₁ between the means for linking 2'₁, 2"₁ and the vertical direction, the angle α₂ between the means for linking 2'₂, 2"₂ and the vertical direction, the angle α₃ between the means for linking 2'₃, 2"₃ and the vertical direction are equal to the arccos(sqrt (2/3)), which is nearly 35 degrees.

A further choice concerns the angle β between the axis of the means for linking 2' and the axis through the centres of the means for hinging 1/2' and 1/3', which is due to the two above conditions, equal to the angle between the axis if the means for linking 2" and the axis through the centres of the means for hinging 1/2" and 1/3" which can be arbitrarily chosen to be 90 degrees for all elementary coupling devices, in the undisturbed state of the complex coupling device.

Finally, for reasons of symmetry, the angle γ between the axis of the means for linking 2' and the axis through the centres of the means for hinging 1/2' and 1/2", as well as the angle γ between the axis of the means for linking 2" and the axis through the centres of the means for hinging 1/2' and 1/2", are chosen to be 90 degrees for all three elementary coupling devices in the undisturbed state of he complex coupling device.

Thus, for this geometry, the undisturbed state - with all translations of the means for supporting 3 relative to the means for resting 4 equal to zero - is obtained for:
- angles α of about 35° between each of the means for linking 2'₁, 2"₁, 2'₂, 2"₂, 2'₃ and 2"₃, and the vertical direction,
- angles β of 90° between each of the means for linking 2'₁, 2"₁, 2'₂, 2"₂, 2'₃, 2"₃ and the axis through the respective second means for hinging 1/2'₁, 1/2"₁, 1/2'₂, 1/2"₂ , 1/2'₃, 1/2"₃, and the respective third means for hinging 1/3'₁, 1/3"₁, 1/3'₂, 1/3"₂ , 1/3'₃, 1/3"₃
- axes of the springs crossing the centres of gravity of the combination of the means for stiffening 1₁, 1₂, and 1₃, the means for supporting 3 and the object to be coupled 3ₒ, and
- angles between springs and vertical direction depending on mass distribution and resonance frequencies wanted.

The use of hollow boxes as means for stiffening 1₁, 1₂, and 1₃ in the complex coupling device provides partially shock and vibration isolated housings for further objects as, for example, electronics units.

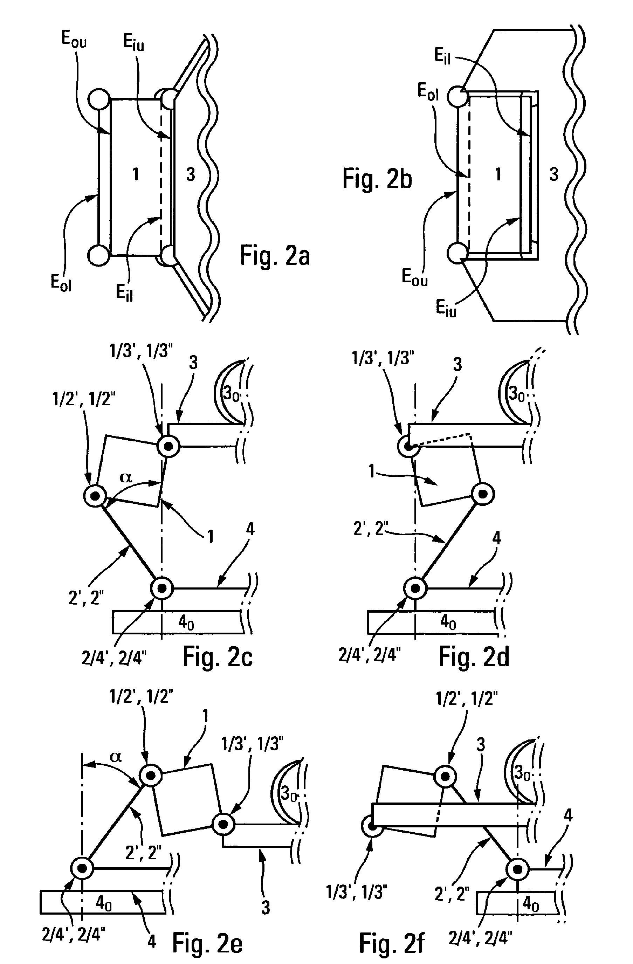

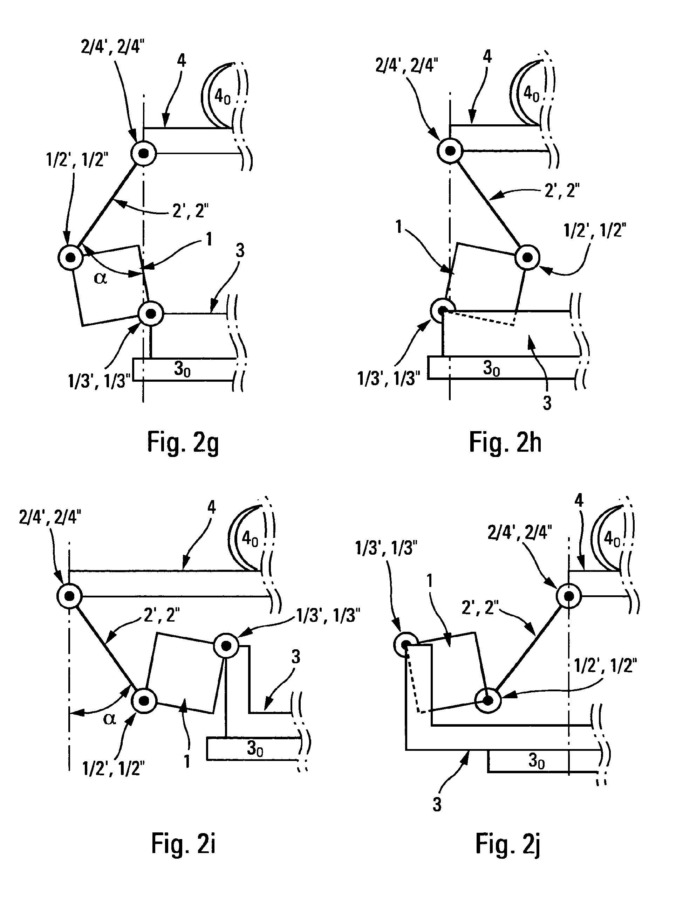

Figure 2a and Figure 2b show schematic partial top views of two alternative examples for integrating the elementary coupling device in a complex coupling device. Figure 2c, Figure 2d, Figure 2e, Figure 2f, Figure 2g, Figure 2h, Figure 2i and Figure 2j show schematic partial side views of eight alternative examples for integrating the elementary coupling device in a complex coupling device. Figure 2a is a top view of the alternative in Figure 2c, while Figure 2b is a top view of the alternative in Figure 2d.

In the first four alternatives illustrated by Figure 2a, Figure 2b, Figure 2c, Figure 2d, Figure 2e and Figure 2f, the elementary coupling device is integrated with the means for linking 2'-2" on the lower side. The complex coupling devices contain two or more elementary coupling devices (not shown) located next to the wavy break lines (on the right side of the figures).

In a first alternative illustrated by Figure 2a and Figure 2c, the means for linking 2' and 2" are connected to the ends of the outer lower edge Eₒₗ of the means for stiffening 1. Moreover, a first means for connecting 3 which is in these cases the means for supporting 3 is connected to the means for stiffening 1 at the ends of the inner upper edge Eᵢᵤ of the means for stiffening 1.

In a second alternative illustrated by Figure 2b and Figure 2d, the means for linking 2' and 2" are connected to the ends of the inner lower edge Eᵢₗ of the means for stiffening 1. Moreover, a first means for connecting 3 which is in these cases the means for supporting 3 is connected to the means for stiffening 1 at the ends of the outer upper edge Eₒᵤ of the means for stiffening 1.

Other variations are possible. For example, in two of these variations, the means for linking 2' and 2" are connected at the ends of an upper edge of the means for stiffening 1, as illustrated by Figures 2e and 2f, respectively at the ends of the outer upper edge Eₒᵤ and the ends of the inner upper edge Eᵢᵤ.

All described variations are possible upside down, with the means for linking on the upper side as shown by Figures 2g, 2h, 2i and 2j. In the second four alternatives illustrated by Figure 2g, Figure 2h, Figure 2i and Figure 2j, the elementary coupling device is integrated in the complex coupling device with the means for linking 2' and 2" on the upper side. Moreover, the first means for connecting 3 the first object 3ₒ is in these cases not a means for supporting but a means for resting, and the second means for connecting 4 the second object 4ₒ is a means for supporting. The complex coupling devices contain two or more elementary coupling devices (not shown) located next to the wavy break lines (on the right side of the figures).

In these second four alternatives, the first means for connecting 3 is on the lower side and this first means for connecting 3 could be mounted on, for example, a ship. The second means for connecting 4 is on the upper side and could in case of one of these alternatives support radar, antenna or optical sensor equipment.

Figures 3a, 3b, 3c and 3d propose a first embodiment of the complex coupling device according to the invention. In this first embodiment, the means for linking 2'₁, 2"₁, 2'₂, 2"₂, 2'₃, 2"₃ are connected to the respective means for stiffening 1₁, 1₂, and 1₃ at the ends of their outer lower edges Eₒₗ. Moreover, the means for supporting 3 is connected to the means for stiffening 1₁, 1₂, and 1₃ at the ends of their inner upper edges Eᵢᵤ.

As clearly shown by Figure 3a, the means for supporting 3 may be an inverted cone comprising an upper six-sided ring, one side out of two being hinged on the means for stiffening 1₁, 1₂, and 1₃ of one of the three elementary coupling devices. The lower circular ring of the central inverted cone 3 can provide a base for a radar antenna system or other sensor providing (accurate) angular co-ordinates. By using an inverted cone instead of a possible plain flat base for the means for supporting 3, the centre of gravity of the supported first object to be coupled 3ₒ is lowered.

Each of the three means for absorbing vibrations and shocks 5₁, 5₂, and 5₃ has its first extremity connected to the lower circular ring of the central inverted cone 3 by a means for hinging, respectively 5/3₁, 5/3₂, and 5/3₃ as represented in Figures 3a, 3b, 3c and 3d.

The design of the first embodiment of the complex coupling device incorporates ideal angles α of the arccos (sqrt (2/3)) ≈ 35 ° between the axis of the means for linking 2'₁, 2"₁, 2'₂, 2"₂, 2'₃ and 2"₃ of the three elementary coupling devices and the vertical direction as shown by Figure 3d. These angles α are external, with which is meant that the means for linking 2'₁, 2"₁, 2'₂, 2"₂, 2'₃ and 2"₃ of the three elementary coupling devices are on the outside of an imaginary infinitely long cylinder 10 with its central axis parallel to the vertical direction and the centres of the means for hinging 2/4'₁, 2/4"₁, 2/4'₂, 2/4"₂, 2/4'₃ and 2/4"₃ on the surface of this cylinder.

Figures 4a, 4b, 4c and 4d show a second embodiment of the complex coupling device which occupies more space in the horizontal mounting plane but results in a lower means for supporting 3 of the first object to be coupled 3ₒ.

In this second embodiment, the means for linking 2'₁, 2"₁, 2'₂, 2"₂, 2'₃ and 2"₃ are connected to the respective means for stiffening 1₁, 1₂, and 1₃ at the ends of their outer upper edges Eₒᵤ. Moreover, the means for supporting 3 is connected to the means for stiffening 1₁, 1₂, and 1₃ at the ends of their inner lower edges Eᵢₗ.

The design of this second embodiment of the complex coupling device also incorporates ideal angles α of the arccos (sqrt (2/3)) ≈ 35 ° between the axes of the means for linking 2'₁, 2"₁, 2'₂, 2"₂, 2'₃ and 2"₃ of the three elementary coupling devices and the vertical direction as shown by Figure 4d. These angles α are internal, with which is meant that the means for linking 2'₁, 2"₁, 2'₂, 2"₂, 2'₃ and 2"₃ of the three elementary coupling devices are on the inside of an imaginary infinitely long cylinder 10 with its central axis parallel to the vertical direction and the centres of the means for hinging 2/4'₁, 2/4"₁, 2/4'₂, 2/4"₂, 2/4'₃ and 2/4"₃ on the surface of this cylinder.

Other variations not represented are possible in which the means for stiffening 1₁, 1₂, and 1₃ are placed on the lower side of the complex coupling device and the means for linking 2'₁, 2"₁, 2'₂, 2"₂, 2'₃, and 2"₃ are placed on its upper side. So, the means for stiffening 1₁, 1₂, and 1₃ are connected to the means for resting 3 through means for hinging. Moreover, the means for linking 2'₁, 2"₁, 2'₂, 2"₂, 2'₃, and 2"₃ are connected to the means for supporting 4 through means for hinging.

In these variations, if some objects are placed in one or more hollow boxes used as means for stiffening 1₁, 1₂, and 1₃, these objects will not be protected against shocks and vibration, in a manner as they are in the first and second embodiments of the complex coupling device. Thus, when placing sensitive electronics in the hollow boxes 1₁, 1₂, and/or 1₃, the complex coupling device of the first and second embodiments will be preferred over these variations owing to a better shock and vibration isolation.

These variations will be preferred over the complex coupling device of the first and second embodiments when using relatively heavy means for stiffening 1₁, 1₂, and 1₃ in comparison with the means for linking 2'₁, 2"₁, 2'₂, 2"₂, 2'₃, and 2"₃. Owing to the lower placement of the means for stiffening 1₁, 1₂, and 1₃, the spring stiffness and thus the spring mass can be lower to reach the same resonance frequencies of the translation modes.

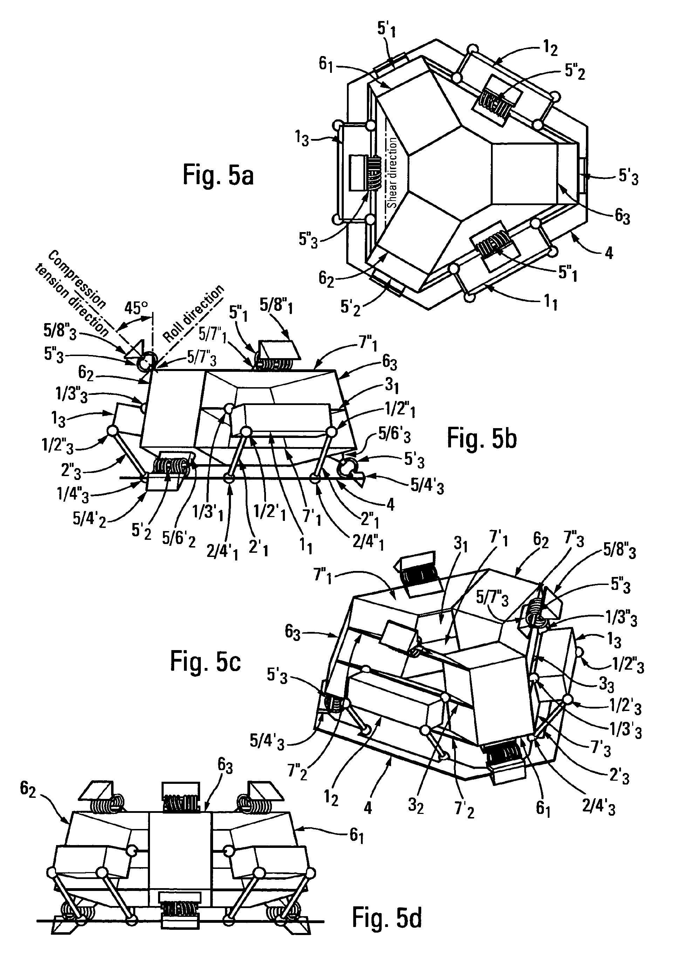

Figures 5a, 5b, 5c and 5d present a third embodiment of the complex coupling device. This embodiment comprises three non-rotating box-shaped antennae 6₁, 6₂, and 6₃, which are rigidly connected in a highly integrated manner to the means for supporting 3₁, 3₂ and 3₃.

The third embodiment of the complex coupling device proposes to connect the means for linking 2'₁, 2"₁, 2'₂, 2"₂, 2'₃, and 2"₃ to the respective means for stiffening 1₁, 1₂, and 1₃ at the ends of their outer lower edges Eₒₗ. Moreover, the means for supporting 3₁, 3₂ and 3₃ are connected to the respective means for stiffening 1₁, 1₂, and 1₃ at the ends of their inner upper edges Eᵢᵤ.

As clearly shown in Figure 5a, Figure 5b, Figure 5c and Figure 5d the third embodiment of the complex coupling device comprises six means for absorbing vibrations and shocks 5'₁, 5"₁, 5'₂, 5"₂, 5'₃ and 5"₃, materialised as, for example, wire rope isolators (cable mounts).

The means for absorbing vibrations and shocks 5'₁, 5'₂ and 5'₃ are placed under and are indirectly but rigidly connected to the respective box-shaped antennae 6₁, 6₂, and 6₃. The rigid connection is achieved using means for mounting 5/6'₁, 5/6'₂, 5/6'₃, mounted to the inner upper sides of the means for absorbing vibrations and shocks 5'₁, 5'₂ and 5'₃ respectively. The outer lower sides of the means for absorbing vibrations and shocks 5'₁, 5'₂ and 5'₃ are indirectly but rigidly connected to a lower six sided ring 4, using means for mounting 5/4'₁, 5/4'₂, 5/4'₃.

The means for absorbing vibrations and shocks 5"₁, 5"₂ and 5"₃ are placed on the top and are indirectly but rigidly connected to the respective means for interconnection (stiffening plates, for example) 7"₁, 7"₂, and 7"₃. The indirect but rigid connection is achieved using means for mounting 5/7"₁, 5/7"₂, 5/7"₃, mounted to the inner lower sides of the means for absorbing vibrations and shocks 5"₁, 5"₂ and 5"₃ respectively.

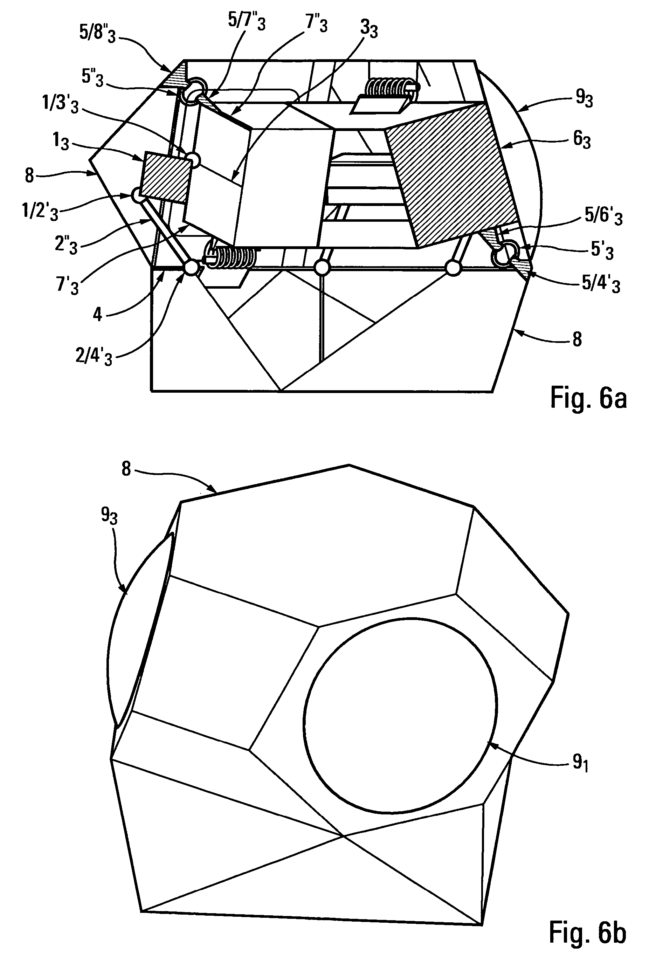

The outer upper sides of the means for absorbing vibrations and shocks 5"₁, 5"₂ and 5"₃ can be indirectly but rigidly connected to, for example, a means for covering 8, materialised as a mast (shown in Figure 6a and Figure 6b), using means for mounting 5/8"₁, 5/8"₂, and 5/8"₃.

Figure 5a clarifies the generally used definition of 'shear direction' of the proposed type of wire rope isolator, indicating it for wire rope isolator 5"₃. Figure 5b clarifies the generally used definitions of 'compression-tension direction' and 'roll direction', indicating these again for wire rope isolator 5"₃.

The compression-tension directions of the rope isolators 5'₁, 5"₁, 5'₂, 5"₂, 5'₃ and 5"₃ make angles of 45 degrees with the vertical direction. Furthermore all wire rope isolators 5'₁, 5"₁, 5'₂, 5"₂, 5'₃ and 5"₃, are oriented so that their compression-tension directions approximately cross the centre of gravity of the combination of the three means for stiffening 1₁, 1₂ and 1₃, the three antennae 6₁, 6₂ and 6₃, the means for supporting 3₁, 3₂ and 3₃, and the means for interconnection 7'₁, 7"₁, 7'₂, 7"₂, 7'₃ and 7"₃. Finally wire rope isolators 5'₁ and 5"₁ are oriented relative to antenna 6₁ similar as wire rope isolators 5'₂ and 5"₂ relative to antenna 6₂ and similar as wire rope isolators 5'₃ and 5"₃ relative to antenna 6₃.

These measures ensure that in spite of generally strongly differing stiffness values of the proposed wire rope isolators in their previously defined roll, shear and compression-tension directions, similar stiffness values are obtained for all directions for the complete complex coupling device suspended on the six wire rope isolators 5'₁, 5"₁, 5'₂, 5"₂, 5'₃ and 5"₃. Thus, also the shock behaviour in all directions and the resonance frequencies of the three main translational modes of the complete complex coupling device suspended on the six wire rope isolators 5'₁, 5"₁, 5'₂, 5"₂, 5'₃ and 5"₃ are more or less equal.

An extension of the third embodiment of the complex coupling device is illustrated by Figure 6a and Figure 6b. It comprises a means for covering 8 this above described third embodiment.

The means for covering 8 can be a mast covering the complex coupling device on its sides and on its top. This mast raises the possibility of connecting the first object to be coupled 3ₒ - such as the combination of the three antennas 6₁, 6₂, and 6₃, the means for supporting 3₁, 3₂ and 3₃, and the means for interconnection 7'₁, 7"₁, 7'₂, 7"₂, 7'₃ and 7"₃, for example - to the non-isolated surroundings using springs placed at the bottom as well as the top of the antennas. This approach minimises disturbing titling torques due to, for example, ship movements.

Moreover, the front side of each antenna 6₁, 6₂, and 6₃ can be covered with a radar transmissible radome 9₁, 9₂, and 9₃ respectively, mounted on the mast 8 as shown in Figures 6a and 6b.

In applications for non-rotating antennae, the means for absorbing vibrations and shocks 5 (5'₁, 5"₁, 5'₂, 5"₂, 5'₃ and 5"₃) can be placed on the bottom and top sides of the antennas 6 (6₁, 6₂, and 6₃) and/or on the stiffening plates interconnecting the antennas 7(7'₁, 7"₁, 7'₂, 7"₂, 7'₃ and 7"₃) in order to minimise disturbing tilting torques and thus increase angle accuracy.

In order to use such complex coupling device in a particular application, the means for supporting 3, 4 can be specially adapted for supporting radar, antenna or optical sensor equipment. In particular, the complex coupling device can be used for radar, antenna and/or optical sensor equipment on board of any moving vehicle such as ships, terrestrial vehicles, aeroplanes, rockets...

Another application of the complex coupling devices according to the invention may be isolation of electronics cabinets from ground vibration and/or shocks, for example such as in seismically active environments or due to nuclear-induced shocks.

More generally, such complex coupling devices may be used to support any object for which all rotation axes should be blocked and all translations are free.

## Claims

1. A complex coupling device comprising a plurality of elementary coupling devices, each elementary coupling device comprising:
- A box for stiffening (1) the elementary coupling device against torsion,
- Two bars for linking (2',2") the box (1) to a second object to be coupled (4ₒ),
- Two first means for hinging (2/4', 2/4") the two bars (2', 2") on the second object to be coupled (4ₒ) at two separate points,
- Two second means for hinging (1/2', 1/2") the box (1) on the bars at two separate points,
- Two third means for hinging (1/3', 1/3") the box (1) on a first object to be coupled (3ₒ) at two separate points,
**characterised in that** it comprises three elementary coupling devices, all the means for hinging (2/4', 2/4", 1/2', 1/2", 1/3', 1/3") of the three elementary coupling devices allowing rotation around any axis.

2. A complex coupling device according to the preceding claim **characterised in that** the box (1) is a hollow box.

3. A complex coupling device according to any of the preceding claims **characterised in that** at least one of the two third means for hinging (1/3', 1/3") allows rotation around one axis said axis crossing the centres of both third means for hinging (1/3', 1/3").

4. A complex coupling device according to any of the preceding claims **characterised in that** at least one of the two third means for hinging (1/3', 1/3") allows translational movement.

5. A complex coupling device according to any of the preceding claims **characterised in that** it comprises a second means for connecting (4) on which the bars (2', 2") are connected, this said second means for connecting (4) being hinged to the two bars (2', 2") by the two first means for hinging (2/4', 2/4") and being fixed on the second object to be coupled (4ₒ).

6. A complex coupling device according to any of the preceding claims **characterised in that** it comprises a first means for connecting (3) the first object to be coupled (3ₒ), this said first means for connecting (3) being hinged to the box (1) by the two third means for hinging (1/3', 1/3") at two separate points.

7. A complex coupling device according to any of the preceding claims **characterised in that** the bars (2', 2") rest on the first means for connecting (3) or the second means for connecting (4), called means for resting, and, respectively, the second means for connecting (4) or the first means for connecting (3) are means for supporting the second object (4ₒ) or the first object (3ₒ).

8. A complex coupling device according to any of the preceding claim **characterised in that** the three elementary coupling device are mounted relatively to each other so that the axes of all elementary coupling devices are mutually perpendicular, this said elementary axes being the axes normal to the planes defined by the two bars (2'₁-2"₁, 2'₂-2"₂, 2'₃-2"₃) of each elementary coupling device.

9. A complex coupling device according to any of the preceding claims **characterised in that** the means for supporting (3, 4) is common to the three elementary coupling devices.

10. A complex coupling device according to the preceding claim **characterised in that** the means for supporting (3, 4) is an inverted cone comprising an upper six-sided ring, one side out of two being hinged to the box (1₁, 1₂, 1₃) of one of the three elementary coupling devices.

11. A complex coupling device according to any of the preceding claims **characterised in that** the angles (α) between the axes of the bars (2'₁-2"1, 2'₂-2"₂, 2'₃-2"₃) of the three elementary coupling devices and the vertical direction are equal to arccos (sqrt (2/3)).

12. A complex coupling device according to any of the preceding claims **characterised in that** it comprises means for absorbing vibrations and shocks (5₁,5₂, 5₃) linked to the means for supporting (3, 4) and the means for resting (4, 3).

13. A complex coupling device according to the preceding claim **characterised in that** it comprises one means for absorbing vibrations and shocks (5₁, 5₂, 5₃) in between each group of two elementary coupling devices.

14. A complex coupling device according to any of the preceding claims **characterised in that** it comprises means for covering (8) the complex coupling device on its sides and/or on its top.

15. Use of a complex coupling device according to any of the preceding claims **characterised in that** the means for supporting (3, 4) is specially adapted for supporting radar or antenna or optical sensor equipment.

## Patentansprüche

1. Komplexe Kupplungsvorrichtung, die mehrere elementare Kupplungsvorrichtungen umfasst, wobei jede elementare Kupplungsvorrichtung Folgendes umfasst:
- einen Kasten (1) zur Versteifung der elementaren Kupplungsvorrichtung gegen Torsion,
- zwei Stangen (2', 2") zur Verbindung des Kastens (1) mit einem zweiten zu koppelnden Objekt (4ₒ),
- zwei erste Mittel (2/4', 2/4") zum Anlenken der beiden Stangen (2', 2") an das zweite zu koppelnde Objekt (4ₒ) an zwei getrennten Punkten,
- zwei zweite Mittel (1 /2', 1/2") zum Anlenken des Kastens (1) an die Stangen an zwei getrennten Punkten,
- zwei dritte Mittel (1/3', 1/3") zum Anlenken des Kastens (1) an ein erstes zu koppelndes Objekt (3ₒ) an zwei getrennten Punkten,
**dadurch gekennzeichnet, dass** sie drei elementare Kupplungsvorrichtungen umfasst, wobei alle Anlenkmittel (2/4', 2/4", 1/2', 1/2", 1/3', 1/3") der drei elementaren Kupplungsvorrichtungen eine Drehung um eine beliebige Achse gestatten.

2. Komplexe Kupplungsvorrichtung nach dem vorhergehenden Anspruch, **dadurch gekennzeichnet, dass** der Kasten (1) ein hohler Kasten ist.

3. Komplexe Kupplungsvorrichtung nach einem der vorhergehenden Ansprüche, **dadurch gekennzeichnet, dass** mindestens eines der zwei dritten Anlenkmittel (1/3', 1/3") eine Drehung um eine Achse gestattet, wobei die Achse die Mitten beider dritter Anlenkmittel (1 /3', 1/3") durchquert.

4. Komplexe Kupplungsvorrichtung nach einem der vorhergehenden Ansprüche, **dadurch gekennzeichnet, dass** mindestens eines der beiden dritten Anlenkmittel (1/3', 1/3") eine translatorische Bewegung gestattet.

5. Komplexe Kupplungsvorrichtung nach einem der vorhergehenden Ansprüche, **dadurch gekennzeichnet, dass** sie ein zweites Verbindungsmittel (4) umfasst, an dem die Stangen (2', 2") verbunden sind, wobei dieses zweite Verbindungsmittel (4) durch die beiden ersten Anlenkmittel (2/4', 2/4") an die beiden Stangen (2', 2") angelenkt ist und an dem zweiten zu koppelnden Objekt (4ₒ) befestigt ist.

6. Komplexe Kupplungsvorrichtung nach einem der vorhergehenden Ansprüche, **dadurch gekennzeichnet, dass** sie ein erstes Mittel (3) zur Verbindung des ersten zu koppelnden Objekts (3ₒ) umfasst, wobei dieses erste Verbindungsmittel (3) durch die beiden dritten Anlenkmittel (1/3', 1/3") an zwei getrennten Punkten an den Kasten (1) angelenkt ist.

7. Komplexe Kupplungsvorrichtung nach einem der vorhergehenden Ansprüche, **dadurch gekennzeichnet, dass** die Stangen (2', 2") auf dem ersten Verbindungsmittel (3) oder dem zweiten Verbindungsmittel (4), Auflagemittel genannt, aufliegen bzw. das zweite Verbindungsmittel (4) oder das erste Verbindungsmittel (3) Mittel zum Stützen des zweiten Objekts (4ₒ) oder des ersten Objekts (3ₒ) sind.

8. Komplexe Kupplungsvorrichtung nach einem der vorhergehenden Ansprüche, **dadurch gekennzeichnet, dass** die drei elementaren Kupplungsvorrichtungen bezüglich einander so befestigt sind, dass die Achsen aller elementaren Kupplungsvorrichtungen senkrecht zueinander verlaufen, wobei diese elementaren Achsen die Achsen sind, die normal zu den durch die beiden Stangen (2'₁ - 2"₁, 2'₂ - 2"₂, 2'₃ - 2"₃) jeder elementaren Kupplungsvorrichtung definierten Ebenen verlaufen.

9. Komplexe Kupplungsvorrichtung nach einem der vorhergehenden Ansprüche, **dadurch gekennzeichnet, dass** das Stützmittel (3, 4) den drei elementaren Kupplungsvorrichtungen gemein ist.

10. Komplexe Kupplungsvorrichtung nach einem der vorhergehenden Ansprüche, **dadurch gekennzeichnet, dass** das Stützmittel (3, 4) ein umgedrehter Kegel ist, der einen oberen sechsseitigen Ring umfasst, wobei eine von zwei Seiten an den Kasten (1₁, 1₂, 1₃) einer der drei elementaren Kupplungsvorrichtungen angelenkt ist.

11. Komplexe Kupplungsvorrichtung nach einem der vorhergehenden Ansprüche, **dadurch gekennzeichnet, dass** die Winkel (α) zwischen den Achsen der Stangen (2'₁ - 2"₁, 2'₂ - 2"₂, 2'₃ - 2"₃) der drei elementaren Kupplungsvorrichtungen und die vertikale Richtung gleich Arkkos (sqrt (2/3)) sind.

12. Komplexe Kupplungsvorrichtung nach einem der vorhergehenden Ansprüche, **dadurch gekennzeichnet, dass** sie Mittel (5₁, 5₂, 5₃) zur Aufnahme von Schwingungen und Stößen umfasst, die mit den Stützmitteln (3, 4) und den Auflagemitteln (4, 3) verbunden sind.

13. Komplexe Kupplungsvorrichtung nach einem der vorhergehenden Ansprüche, **dadurch gekennzeichnet, dass** sie ein Mittel (5₁, 5₂, 5₃) zur Aufnahme von Schwingungen und Stößen zwischen jeder Gruppe von zwei elementaren Kupplungsvorrichtungen umfasst.

14. Komplexe Kupplungsvorrichtung nach einem der vorhergehenden Ansprüche, **dadurch gekennzeichnet, dass** sie Mittel (8) zur Abdeckung der komplexen Kupplungsvorrichtung an ihren Seiten und/oder an ihrer Oberseite umfasst.

15. Verwendung einer komplexen Kupplungsvorrichtung nach einem der vorhergehenden Ansprüche, **dadurch gekennzeichnet, dass** das Stützmittel (3, 4) insbesondere zum Stützen von Radar- oder Antennen oder optischen Sensoreinrichtungen ausgeführt ist.

## Revendications

1. Dispositif d'accouplement complexe comprenant une pluralité de dispositifs d'accouplement élémentaires, chaque dispositif d'accouplement élémentaire comprenant :
- une boîte pour rendre rigide (1) le dispositif d'accouplement élémentaire contre la torsion,
- deux barres pour relier (2', 2") la boîte (1) à un deuxième objet à accoupler (4ₒ),
- deux premiers moyens pour articuler (2/4', 2/4") les deux barres (2', 2") sur le deuxième objet à accoupler (4ₒ) à deux endroits séparés,
- deux deuxièmes moyens pour articuler (1/2', 1/2") la boîte (1) sur les barres à deux endroits séparés,
- deux troisièmes moyens pour articuler (1/3', 1/3") la boîte (1) sur un premier objet à accoupler (3ₒ) à deux endroits séparés,
**caractérisé en ce qu'**il comprend trois dispositifs d'accouplement élémentaires, tous les moyens pour articuler (2/4', 2/4", 1/2', 1/2", 1/3', 1/3") de ces trois dispositifs d'accouplement élémentaires permettant la rotation autour de n'importe quel axe.

2. Dispositif d'accouplement complexe selon la revendication précédente, **caractérisé en ce que** la boîte (1) est une boîte creuse.

3. Dispositif d'accouplement complexe selon l'une quelconque des revendications précédentes, **caractérisé en ce qu'**au moins un des deux troisièmes moyens pour articuler (1/3', 1/3") permet la rotation autour d'un axe, ledit axe traversant les centres des deux troisièmes moyens pour articuler (1/3', 1/3").

4. Dispositif d'accouplement complexe selon l'une quelconque des revendications précédentes, **caractérisé en ce qu'**au moins un des deux troisièmes moyens pour articuler (1/3', 1/3") permet un mouvement de translation.

5. Dispositif d'accouplement complexe selon l'une quelconque des revendications précédentes, **caractérisé en ce qu'**il comprend un deuxième moyen pour raccorder (4) sur lequel les barres (2', 2") sont raccordées, ce dit deuxième moyen pour raccorder (4) étant articulé aux deux barres (2', 2") par les deux premiers moyens pour articuler (2/4', 2/4") et étant fixé sur le deuxième objet à accoupler (4ₒ).

6. Dispositif d'accouplement complexe selon l'une quelconque des revendications précédentes, **caractérisé en ce qu'**il comprend un premier moyen pour raccorder (3) le premier objet à accoupler (3ₒ), ce dit premier moyen pour raccorder (3) étant articulé à la boîte (1) par les deux troisièmes moyens pour articuler (1/3', 1/3") à deux endroits séparés.

7. Dispositif d'accouplement complexe selon l'une quelconque des revendications précédentes, **caractérisé en ce que** les barres (2', 2") reposent sur le premier moyen pour raccorder (3) ou sur le deuxième moyen pour raccorder (4), appelé moyen pour reposer, et, respectivement, le deuxième moyen pour raccorder (4) ou le premier moyen pour raccorder (3) sont des moyens pour supporter le deuxième objet (4ₒ) ou le premier objet (3ₒ),

8. Dispositif d'accouplement complexe selon l'une quelconque des revendications précédentes, **caractérisé en ce que** les trois dispositifs d'accouplement élémentaires sont montés relativement l'un à l'autre de façon à ce que les axes de tous les dispositifs d'accouplement élémentaires soient mutuellement perpendiculaires, ces dits axes élémentaires étant les axes normaux aux plans définis par les deux barres (2'₁-2"₁, 2'₂-2"₂, 2'₃-2"₃) de chaque dispositif d'accouplement élémentaire.

9. Dispositif d'accouplement complexe selon l'une quelconque des revendications précédentes, **caractérisé en ce que** le moyen pour supporter (3, 4) est commun aux trois dispositifs d'accouplement élémentaires.

10. Dispositif d'accouplement complexe selon l'une quelconque des revendications précédentes, **caractérisé en ce que** le moyen pour supporter (3, 4) est un cône inversé comprenant une bague supérieure à six côtés, un côté sur deux étant articulé à la boîte (1₁, 1₂, 1₃) d'un des trois dispositifs d'accouplement élémentaires.

11. Dispositif d'accouplement complexe selon l'une quelconque des revendications précédentes, **caractérisé en ce que** les angles (α) entre les axes des barres (2'₁-2"₁, 2'2-2"2, 2'₃-2"₃) des trois dispositifs d'accouplement élémentaires et la direction verticale sont égaux au arccos(sqrt(2/3)).

12. Dispositif d'accouplement complexe selon l'une quelconque des revendications précédentes, **caractérisé en ce qu'**il comprend des moyens pour absorber les vibrations et les chocs (5₁, 5₂, 5₃) liés aux moyens pour supporter (3, 4) et aux moyens pour reposer (4, 3).

13. Dispositif d'accouplement complexe selon la revendication précédente, **caractérisé en ce qu'**il comprend un moyen pour absorber les vibrations et les chocs (5₁, 5₂, 5₃) entre chaque groupe de deux dispositifs d'accouplement élémentaires.

14. Dispositif d'accouplement complexe selon l'une quelconque des revendications précédentes, **caractérisé en ce qu'**il comprend un moyen pour couvrir (8) le dispositif d'accouplement complexe sur ses côtés et/ou sur son sommet.

15. Utilisation d'un dispositif d'accouplement complexe selon l'une quelconque des revendications précédentes, **caractérisé en ce que** le moyen pour supporter (3, 4) est adapté spécialement pour supporter un radar ou une antenne ou un équipement capteur optique.
